Europäisches Patentamt

European Patent Office

Office européen des brevets

(19)

(11) Publication number: **0 023 777**
**A1**

## (12) EUROPEAN PATENT APPLICATION

(21) Application number: **80302342.3**

(22) Date of filing: **10.07.80**

(51) Int. Cl.³: **B 01 D 45/16,** F 28 C 1/16

(30) Priority: **26.07.79 US 61104**

(43) Date of publication of application: **11.02.81**
Bulletin 81/6

(84) Designated Contracting States: **AT BE CH DE FR GB IT LI LU NL SE**

(71) Applicant: **XERXES FIBERGLASS, INC., 7901 Xerxes Avenue South, Minneapolis Minnesota 55431 (US)**

(72) Inventor: **Hoffman, Frank W., 101 Mulberry Street, Springfield Massachusetts 01105 (US)**

(74) Representative: **Ellis, John Clifford Holgate et al, MEWBURN ELLIS & CO. 70-72 Chancery Lane, London WC2A 1AD (GB)**

(54) Liquid eliminator and blade therefor.

(57) A liquid eliminator comprises a plurality of blades (B) for separating entrained liquid from a moving gaseous stream. Each blade (B) has a pair of oppositely disposed arcs (20), illustratively comprising a 90 degree portion of a circle or other plane curve, optionally with a pair of secondary arcs (22), illustratively comprising a 45 degree portion of a circle or other plane curve. The blades (B) are mounted (14, 15) in parallel juxtaposition to form like paths (17) between the blades for the passage of gas and the removal of entrained liquid.

0023777

1.

<u>LIQUID ELIMINATOR AND BLADE THEREFOR.</u>

The invention relates to a liquid eliminator comprising a plurality of blades for separating entrained liquid from a moving gaseous stream, and to blades forming part of such an eliminator.

In many operations, it is necessary to extract a liquid mist and/or liquid particles, which may also contain solids, from a gas in which it is suspended or entrained, either because the gas must be freed of the entrained liquid before the gas can be used, or exhausted to the atmosphere or because the liquid forming the mist is itself useful and comprises a valuable recovery product.

Various devices have been employed for removing entrained liquid from gases. Pertinent and illustrative prior art patents include Carrier US Patent No. 808 897 of 1906; Smith US Patent No. 1 603 878 of 1926; Smith US Patent No. 1 643 736; Dinkelacker US Patent No. 3 338 035 of 1967; Freese et al. US Patent No. 3 358 580 of 1967; Regehr et al. US Patent No. 4 072 478 of 1978; and Arndt et al. US Patent No. 2 870 488 of 1975. Generally the prior art devices known to applicants have not provided the triple goal of high mist and liquid elimination, high volume throughput and little pressure drop through the eliminator. The patent to Arndt et al. while generally effective is subject to certain constraints of economy and efficiency.

According to the present invention an eliminator for removing moisture from a gas stream comprises the combination of arcuate continuous moisture eliminator blades, each blade having two arcs with mutually opposing concave surfaces, and means supporting said blades in spaced complementary parallelism and defining therewith paths for said stream from an inlet at one end of the blades to an outlet at the other end of the blades, a blade on one side of said paths having a convex surface opposite a concave surface of a similar blade on the other side of that same said path.

Further according to the invention blades are provided for separating and trapping-out entrained liquid from rapidly moving gas, these blades having an arcuate configuration and two oppositely opposed arcs the convex surfaces of which face each other, said arcs being joined at a common apex. Preferably these main arcs are $90^{\circ}$ portions of a plane curve, such as a circle, ellipse or oval. However, these main arcs can range from $20^{\circ}$ to $90^{\circ}$. In certain embodiments smaller secondary arcs extend inwardly from the open ends of one or both of the main arcs. These secondary arcs are desirably not more than $90^{\circ}$ portions, preferably $45^{\circ}$ portions.

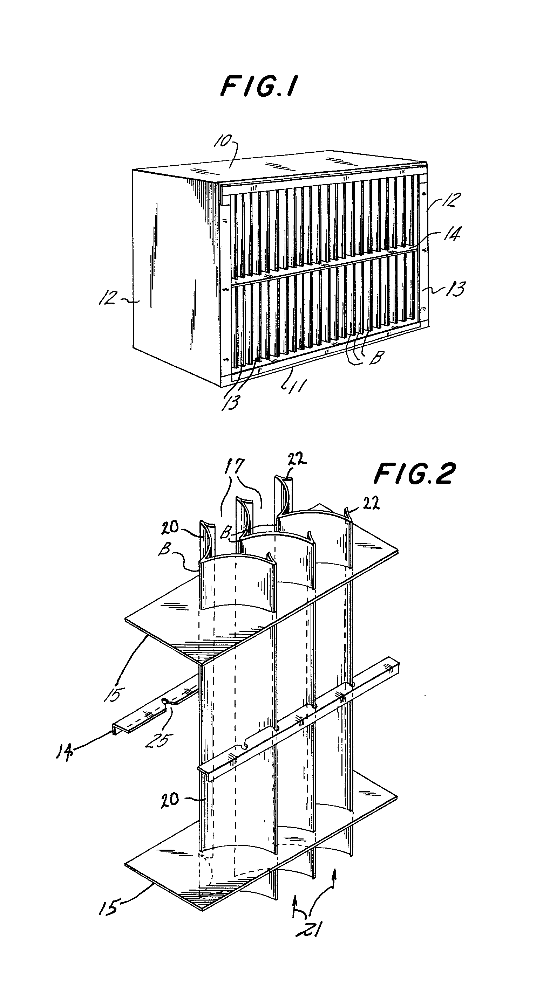

Each arc extends the full vertical height sometimes called vertical length, from top end to bottom end of the blade, i.e., the vertical height of the blades comprising an eliminator as viewed in Figure 2 so that trapped liquid flows out of the blades by gravity. It will be recognized that the blades may also be disposed horizontally to accommodate a vertical gas flow. It is further contemplated that the blades may be inclined to canted at various angles in relation to the gas flow to meet the requirements of particular circumstances. The lateral side edges of the blades at their right and left extremities in these figures will be referred to as the "ends", or horizontal ends of the blades.

Each blade having the arcuate profile characterizing the blades of the present invention can be adapted to be supported by a frame in combination with a series of other like coacting blades in transversely spaced relation to form a plurality of parallel paths between every pair of blades through which the fluid is moved. A mist and/or liquid eliminator comprising these blades arranged in side-by-side fashion, as more fully disclosed below, affords a significantly greater volume throughput of the gas stream with less pressure drop through the eliminator, and with more complete liquid elimination than has been possible with prior art devices.

In the accompanying drawings:

Fig. 1 is an isometric view on a reduced scale of a liquid eliminator comprising a typical assembly and combination of blades of the present invention;

Fig. 2 is a view seen from above of three of one form of the many vertically disposed blades;

Figs. 3, 4 and 5 are top plan views showing blades having three varied modified forms;

Figs. 6, 7 and 8 are, respectively, top plan views showing blades having modified profiles;

Fig. 9 is a top plan view showing a blade having a rounded or snub nose at the arc intersections;

Figs. 10 and 11 are, respectively, top plan views of perforated plates for holding the blades of Figs. 3 and 5, respectively;

Fig. 12 is a plan view of a notch spacer, normally made of an angle, for holding the blades of Fig. 3;

Fig. 13 is a side view of the spacer of Fig. 12.

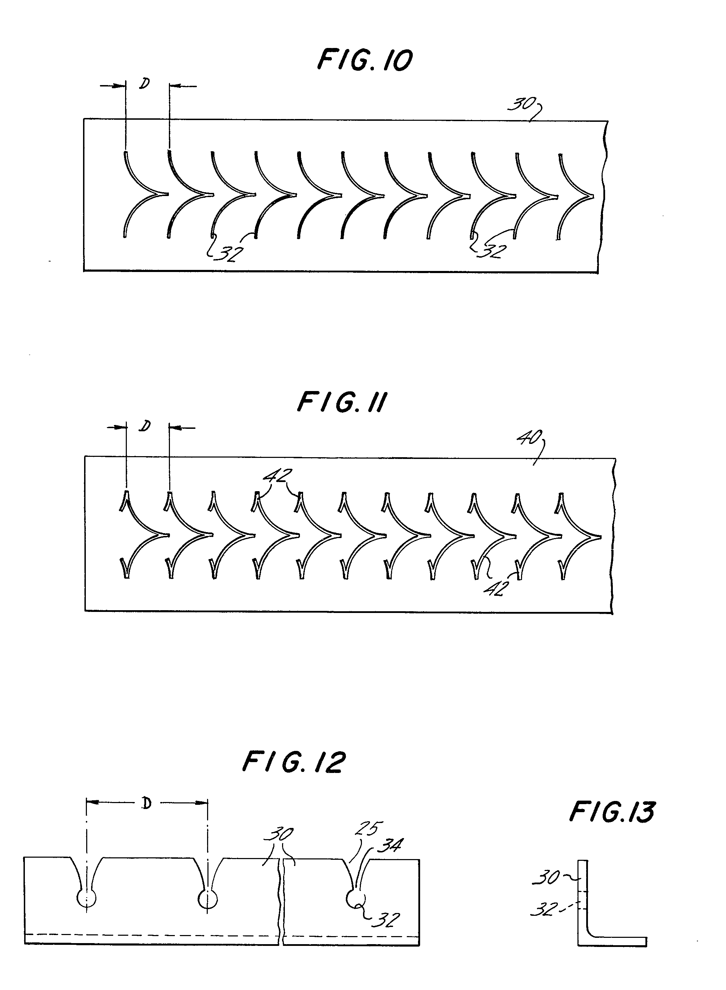

Fig. 1 illustrates one form of eliminator apparatus in which blades of the present invention may be mounted and used. This comprises an open-end cabinet having a horizontal top 10, a bottom 11, joined by two vertical sides 12 so as to leave opposed open ends 13 through which a liquid-laden gas may be forcibly passed. A series of blades generally designated B, standing vertically, fills the cabinet from top to bottom with the horizontal lengths of the blades extending from one open end 13 to the other. Spacer brackets 15 fixed to the cabinet adjacent the top 10 and bottom 11 (Fig. 2) removably grip the tops and bottoms of the blades to hold them in parallel, spaced relation as shown in Fig. 2. A centre, notched reinforcing bar 14 extends between and is secured to the sides 12 and has notches in which the midportions of the horizontal ends of the blades B are seated and held steady against the rush of the gas stream through the eliminator. The perforated plates as shown in Figs. 10 and 11, respectively, illustrate two forms of spacer brackets and these may be used in place of the notched reinforcing bar 14.

In Fig. 2 blades embodying one form of our invention are shown in relation to each other as they are disposed in the eliminator, three blades being arbitrarily shown for illustration. In this form each blade B is the same as the others and comprises a sheet of material formed into an arcuate configuration in the direction of its length, as viewed, to form substantially right angled bends between the plane curve portions 20 comprising the oppositely disposed arcs. The blades are juxtaposed to one another in uniform, symmetrical, spaced relation to define paths 17 therebetween for the forced rapid movement of the gas stream in the direction of arrows 21.

Each blade B has mounting means at its horizontal ends in the form of our invention illustrated herein. One mounting means is shown at the left of Fig. 2. The blades, resiliently yielding material, are snapped into and secured in the opening 25 of reinforcing bars 14.

5.

The bars 14 grip only a limited part of the vertical length of the blade so that there is no loss of surface area of the blades.

The materials from which blades embodying our invention are made preferably comprise those which may be shaped as aluminium, or thermoplastic and thermoset resins including also fibreglass reinforced plastics. It is also possible to fabricate from stainless steel or other metallic alloys. The choice of materials will also comprehend cost as well as environmental accommodation as to temperature and the nature of the fluids to which the blades are exposed. Exemplary resins which may be used include polyphenylene oxide, polyvinyl chloride, polytetrafluoroethylene, vinylesters and polyesters, and the like.

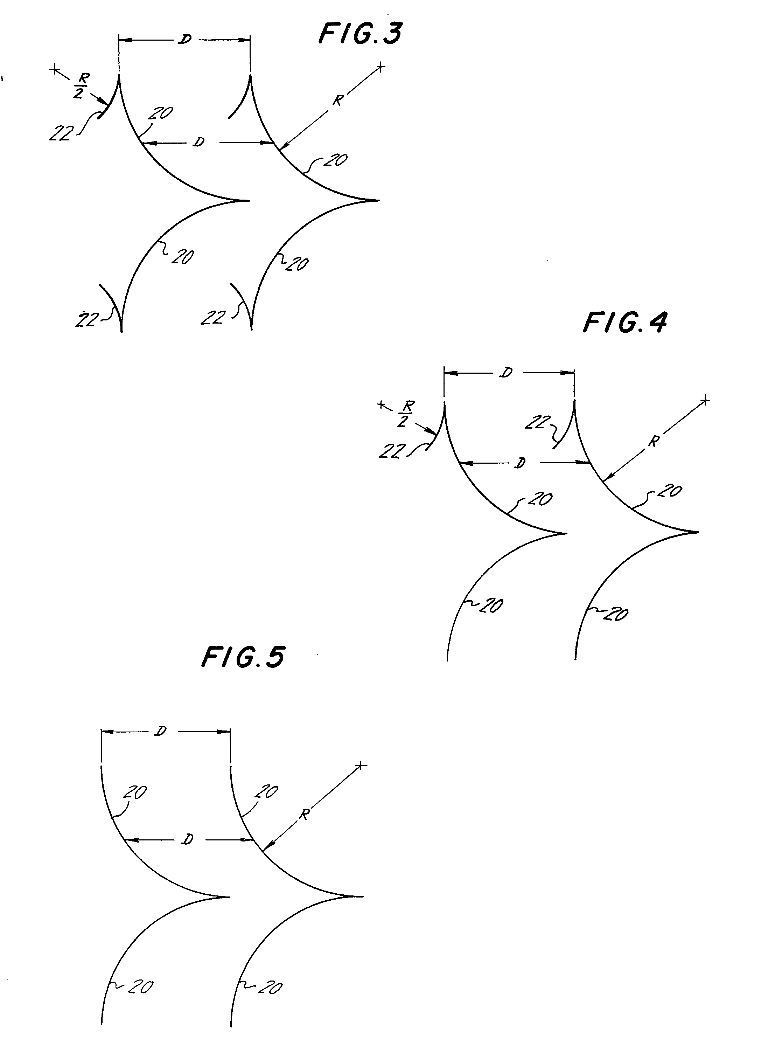

The profiles of three embodiments of the blades of the present invention are shown in Figs. 3, 4 and 5. As illustrated in Fig. 3, the first embodiment is comprised of a pair of main arcs and a pair of secondary arcs. Each of the main arcs 20 is a portion of a circle ranging from 45° to 90° having a radius R. The secondary arc 22 is a portion of a circle ranging from ° having a radius of R/2. The spacing D between blades along the length of the eliminator is normally equal to the radius R. However, this spacing can be varied to effect significant changes in the removal of the entrained mist or liquid. The entrained mist or liquid is comprised of quantities of different size discrete particles. As the gas and liquid pass through parallel blades centrifugal forces cause the droplets to impinge on the surfaces of the blade and to be removed from the gas stream. By varying the degrees of the arcs, both main and secondary, and by varying the spacing D it is possible to attain maximum efficiencies of removal regardless of the droplet size that may be present in the gas stream.

In the second embodiment, illustrated in Fig. 4, only one of the secondary arcs is present. In this embodiment the secondary arc can now range from $0^{\circ}$ angle to $90^{\circ}$ angle.

In the third embodiment, illustrated in Fig. 5, the secondary arcs 22 have been omitted. The choice between the embodiments illustrated in Figs. 3, 4 and 5 is largely dependent upon the end use application. Thus, the embodiment of Fig. 3 is preferably used where maximum efficiencies are required in the air pollution control markets. The embodiment of Fig. 5 is preferably employed in cooling tower applications. The embodiments of all figures can be used in any of the known applications depending on the desired objectives.

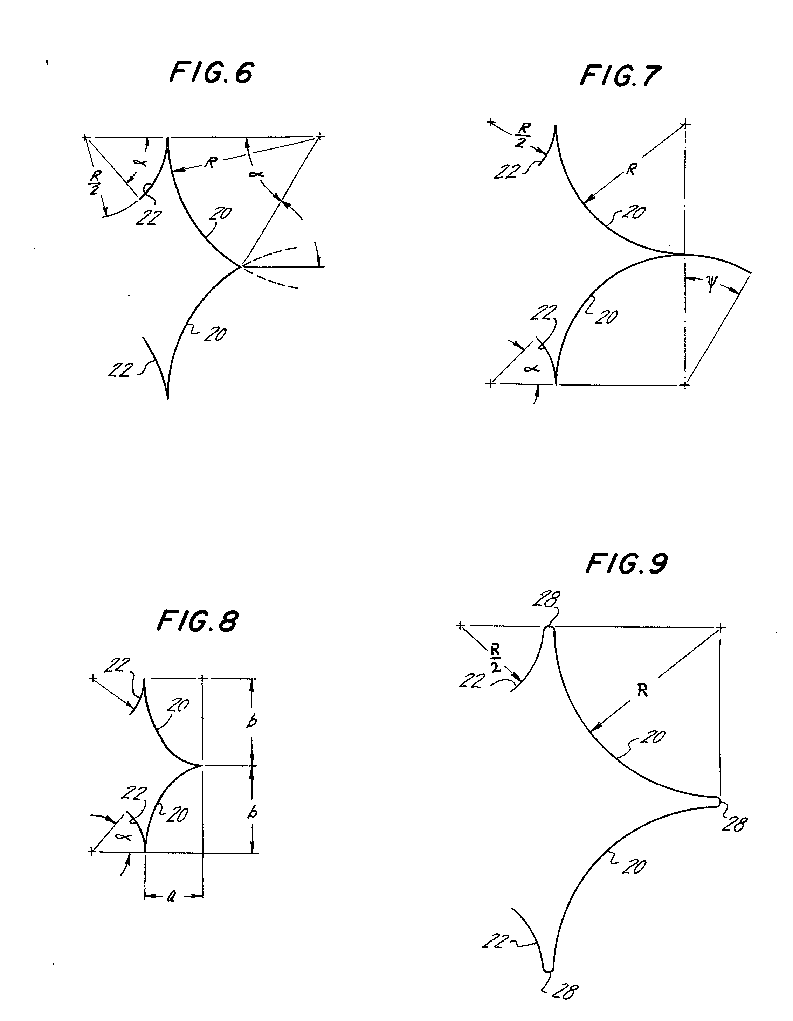

Figs. 6, 7 and 8 ilustrate modified profiles of the basic blade profile shown in Fig. 3, showing how the angle of intersection of the primary arcs can be varied. Fig. 8, in particular, represents a particularly advantageous form wherein the arcs are portions of an oval or ellipsoidal plane curve as defined by lengths a and b. The performance of the blades having the oval-shaped arcs is fully comparable in efficiency with arcs based upon other plane surfaces, such as a circle, while offering a distinct advantage in that less material is employed in the blades of this profile. It is obvious that the aforementioned second and third embodiments can be incorporated into these modified profiles.

It will be recognized by those skilled in the art to which the present invention pertains that the intersection of the arcs in a sharp projection is only practical in the case of blades fabricated from metals.

Where plastic materials are employed in fabricating the blades, a rounded or snubnosed projection is embodied in the blades as illustrated in Fig. 9. The primary arcs 20 intersect or join at projection 28 having a rounded contour and a radius, as shown, which is commonly of the order of about 1/4 inch to about 5/16 inch (about 6 to about 8 mm). These dimensions, however, are not to be considered as limiting. The provision of such rounded projection is more readily within the forming capabilities of industry and gives a much stronger juncture.

The blades of the present invention provide material and significant advantages over those heretofore employed. The savings in material of construction is in the order of about sixty (60) percent. Excellent removal characteristics with comparable static pressure drop are provided in addition to greater flexibility in arrangement to remove a wider range of droplet sizes.

It is possible for horizontal gas flow applications to employ blades embodying our invention of any desired vertical length and the particular length selected will depend upon the particular circumstances and the desired objectives. By way of example only and without limiting the present invention, it is practical to employ blades of 12 feet (3.66 metres) in vertical length in eliminators where a large volume of gas with light to medium liquid content is to be removed. In installations where the liquid content of the gas stream is high the vertical length of the blades, in each eliminator cabinet or container having the same number of blades and having its own drainage tray or system, is prudently reduced as for example from 12 feet (3.66 metres) down to 6 feet (1.8 metres) so that the device will not be overloaded with liquid near the bottoms of the blades. The number of blades of the forms and sizes herein depicted that may be most advantageously employed in one eliminator cabinet as suggested in Fig. 1, reduces itself to a matter of the cost of the cabinet in one form or another ·in relation, for example, to the shape and form of duct work employed to lead the liquid laden gas to the eliminators that are required to remove the desired amount or part of liquid content from the carrier gas stream.

Fig. 10 illustrates a blade holding means for use in an eliminator particularly intended for use in cooling towers. The device comprises a plate 30 having slots 32 into which the arcs of the eliminator blades are inserted. The resilient blades snap into place, securely affixing the blade to the perforated plate in a predetermined position.

Fig. 11 illustrates a similar blade holding means particularly intended for use in air pollution controls. The means depicted here differs from that of Fig. 10 only in that the perforated plate 40 contains slots 42 of a differing configuration in order to accommodate the secondary arcs present in the eliminator blades found preferable for this particular application.

Fig. 12 illustrates a blade holding means which has been found to be particularly effective. The bracket 30 has openings 32 into which the resiliently yielding blades are readily snapped. The passages 25 leading to the openings 32 have restricted throat entrances 34 to provide a secure fit and are spaced a predetermined distance apart.

Fig. 13 provides a side view of the bracket depicted in Fig. 12, the dotted line denoting the level of openings 25.

9.

While particular reference has been made in the foregoing discussion to the employment of particular holding means, it will be apparent that the holding means can be varied according to the objectives, environment and circumstances encountered.

The eliminator blades of the present invention, in all modifications, can include trapping vanes and serrated notches such as are described in US Patent 3 870 488. The radii R and R/2 referred to in connection with the discussion of the main arcs and the secondary arcs can be varied and the spacing between blades can be likewise adjusted in accordance with requirements or convenience in particular applications or under particular conditions.

CLAIMS.

1. An eliminator for removing moisture from a gas stream comprising the combination of arcuate continuous moisture eliminator blades, each blade having two arcs with mutually opposing concave surfaces, and means supporting said blades in spaced complementary parallelism and defining therewith paths for said stream from an inlet at one end of the blades to an outlet at the other end of the blades, a blade on one side of said paths having a convex surface opposite a cancave surface of a similar blade on the other side of that same said path.

2. A moisture eliminator blade adapted to be used with other like blades to provide paths for gaseous streams including entrained liquids to be eliminated, said blade having upstream and downstream ends and an arcuate configuration and two oppositely opposed arcs the convex surfaces of which face each other, said arcs being joined at a common apex.

3. A blade according to claim 2 wherein the arcs, as seen in transverse cross-section, are portions of a circle.

4. A blade according to claim 2 wherein the arcs, as seen in transverse cross-section, are portions of an ellipse or oval.

5. A blade according to claim 3 or claim 4, wherein the arcs are $20^{\circ}$ to $90^{\circ}$ portions of the circle, ellipse or oval.

6. A blade according to any one of claims 2 to 5, wherein a secondary arc is attached to the open end of one of the main arcs, the convex surface of the secondary arc facing the convex surface of the main arc.

7. A blade according to any one of claims 2 to 5, wherein a secondary arc is attached to the open end of both of the main arcs, the convex surfaces of the secondary arcs facing the convex surfaces of the main arcs.

8. A blade according to claim 6 or claim 7 wherein the secondary arc or arcs, as seen in cross-section, are a quadrant of a circle or a portion thereof.

9. A blade according to claim 3 wherein there is attached to the open end of one or each of the main arcs a secondary arc, the convex surface of which faces the convex surface of the main arc, the main arcs forming portions of cylinders, and the secondary arc or arcs also forming portions of cylinders of smaller diameter than those of the main arcs.

10. A moisture eliminator according to claim 1 incorporating blades according to any of claims 2 to 9.

*FIG.1*

*FIG.2*

2/4

0023777

FIG.3

FIG.4

FIG.5

0023777

## FIG.6

## FIG.7

## FIG.8

## FIG.9

FIG. 10

FIG. 11

FIG. 12

FIG. 13

European Patent Office

**EUROPEAN SEARCH REPORT**

0023777

Application number

EP 80 30 2342

## DOCUMENTS CONSIDERED TO BE RELEVANT

| Category | Citation of document with indication, where appropriate, of relevant passages | Relevant to claim |
|---|---|---|
| A | <u>DE - C - 619 183</u> (MIDWEST STEEL & SUPPLY COMP.) | |
| A | <u>US - A - 1 989 774</u> (N.L. SNOW) | |
| A | <u>FR - A - 1 180 545</u> (J. WILISCH) | |

---

**CLASSIFICATION OF THE APPLICATION (Int. Cl.³)**

B 01 D 45/16
F 28 C 1/16

**TECHNICAL FIELDS SEARCHED (Int. Cl.³)**

B 01 D 45/00
F 28 C 1/00
F 02 M 35/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 04-11-1980 | BOGAERTS |

EPO Form 1503.1 06.78